# EUROPÄISCHE PATENTSCHRIFT

(11) **EP 1 064 322 B1**
(45) Veröffentlichungstag und Bekanntmachung des Hinweises auf die Patenterteilung: **15.12.2004**
(21) Anmeldenummer: 99915657.3
(22) Anmeldetag: 18.03.1999
(51) Int. Cl.: C08J 9/00, C08J 9/08

(54) **VERFAHREN ZUR HERSTELLUNG VON SILICONSCHÄUMEN**
METHOD FOR PRODUCING SILICONE FOAMS
PROCEDE PERMETTANT DE PRODUIRE DES MOUSSES DE SILICONE

(30) Priorität: 18.03.1998 DE 19811485
(43) Veröffentlichungstag der Anmeldung: 03.01.2001
(73) Patentinhaber: GE Bayer Silicones GmbH & Co. KG, 40699 Erkrath (DE)
(72) Erfinder: MARQUARDT, Gerwig, D-51519 Odenthal (DE); NAUMANN, Thomas, D-51371 Leverkusen (DE); HURNIK, Helmut, D-51379 Leverkusen (DE)
(86) Internationale Anmeldenummer: PCT/EP1999/001797
(87) Internationale Veröffentlichungsnummer: WO 1999/047591

(56) Entgegenhaltungen:
- EP-A- 0 497 565
- EP-A- 0 751 173
- US-A- 4 026 844
- US-A- 5 019 295
- US-A- 5 438 081

## Beschreibung

Die vorliegende Erfindung betrifft ein Verfahren zur Herstellung von Siliconschäumen mittels Ultrahochfrequenzwellen.

Siliconschaummaterialien sind seit längerer Zeit für verschiedene Anwendungsbereiche über verschiedene Herstellverfahren bekannt. Zu den vielfältigen Anwendungsbereichen gehören die thermische Isolierung bei höheren Temperaturen, die Herstellung von weichen Dichtungen, die Verwendung als Dämpfungselemente in Form von Schäumen u.a. Bei diesen Anwendungen werden die bekannten Eigenschaften von elastischen Siliconmassen genutzt: Temperaturstabilität, die geringe Änderung der mechanischen Eigenschaften bei wechselnden Temperaturen, die gute Alterungsstabilität u.a.

Die verschiedenen Verfahren zur Herstellung von Siliconschäumen sind zahlreich und werden je nach den speziellen Erfordernissen benutzt.

Weit verbreitet ist die Verwendung von Siliconmassen mit Siliciumhydrogengruppen, die während des Vernetzungsvorgangs gleichzeitig Wasserstoff abspalten. Als Reaktionspartner können dabei Silanolgruppen, Alkohole oder auch Wasser dienen. Der entstehende Wasserstoff dient als Treibgas und erzeugt den Siliconschaum mit der gewünschten Porenstruktur, siehe z.B. EP-A 416 229. Ein weiteres Verfahren wird bei der Erzeugung von Siliconschaum aus beißvulkanisierenden, peroxidisch vernetzbaren Siloxanmassen verwendet. Hier dienen in der Wärme zersetzliche Substanzen als Treibmittel, die für den Augenblick der Vulkanisation die aufgeschäumte Siloxanmasse bereitstellen. Dieses Verfahren hat einen breiten Eingang in die Technik erfahren und wird z.B. in US-A 2 857 343 beschrieben.

Weiterhin werden Verfahren beschrieben, bei denen die Gaslöslichkeit z.B. in feuchtigkeitshärtenden Siliconmassen besonders bei höherem Druck ausgenutzt wird. Bei Entspannung der Massen sinkt die Löslichkeit schlagartig und die sich entwickelnden Gasblasen erzeugen den gewünschten Siliconschaum, der dann z.B. durch Wasserzutritt aus der Luftfeuchtigkeit vernetzt wird, siehe z.B. US-A 4 229 548.

Von diesen drei beschriebenen Systemen ist nur mit Hilfe des ersten ein massiver, großvolumiger Siliconschaum erhältlich, der jedoch bezüglich der mechanischen Eigenschaften insbesondere hinsichtlich der Festigkeit und Elastizität nur sehr begrenzte Anforderungen erfüllt.

Weiterhin wurde versucht, aus platinkatalysierten, additionsvernetzenden Siliconmischungen, bei denen bekanntermaßen eine hohe Elastizität sowie gute gummimechanische Eigenschaften erzielbar sind, Siliconschäume sowie Siliconformschaumartikel herzustellen, siehe EP-A 751 173. Hierbei wird die zur Aktivierung des Treibmittels sowie die zur Vulkanisation notwendige Wärme von außen zugeführt. Dazu dient zum Beispiel ein Umluftofen oder im Fall einer Spritzgießmaschine die beheizbare Form. Nachteiligerweise ist hier das erzielbare Schaumvolumen begrenzt, da bei der beginnenden Schaumentwicklung von außen gleichzeitig ein wärmeisolierender Effekt eintritt, der den Zutritt weiterer Energie nach innen behindert und so weiteres Aufschäumen sowie Vulkanisation im Kern ab einer bestimmten Schichtdicke des Schaums, eventuell nach 2 bis 3 cm, zu stark verlangsamt bzw. verhindert. Dickere Silicon-Schaumplatten oder Formschalen, wie man sie zur Wärmeisolierung bei höheren Temperaturen verwenden könnte, waren deshalb nicht herstellbar.

In EP-A 497 565 wurde bereits die Herstellung von Siliconschäumen mittels Ultrahochfrequenzwellen (UHF) in Gegenwart von Azodicarbonamid als UHF-aktiven Substanzen beschrieben. Es wurde jedoch eine Kontaminierung des Vernetzungssystems durch die Verwendung von Azodicarbonamid und Dinitrosopentamethylentetramin beobachtet (s. US-A 5 246 973). US 4 026 844 beschreibt ein Verfahren zum Verschäumen einer Silikonzubereitung unter Verwendung eines gegenüber Mikrowellen empfindlichen Materials.

Es bestand daher ein Bedarf an einem Verfahren zur Herstellung von großvolumigen Siliconschäumen bereitzustellen, das die Nachteile des Standes der Technik nicht aufweist.

Überraschend zeigte sich nun, daß die oben genannte Aufgabe ausgezeichnet mittels UHF-Wellen angeregten additions- oder kondensationsvernetzende Siliconmassen gelöst werden konnte, wenn diese bestimmte Carbonate und/oder -hydrogencarbonate und bestimmte UHF-aktive Substanzen enthalten. Mit dieser Kombination sind in kurzer Zeit elastische, großvolumige Siliconschaumkörper erhältlich.

Gegenstand der vorliegenden Erfindung ist ein Verfahren zur Herstellung von Siliconschäumen mittels Ultrahochfrequenzwellen wie im Anspruch 1 definiert.

In einer bevorzugen Ausführungsform der Erfindung wird als additionsvernetzende Siliconmasse eine Mischung aus
- a₁): 100 Gew.-Teilen mindestens eines vinylgruppenhaltigen linearen oder verzweigten Organopolysiloxans mit mindestens 2 Vinylgruppen mit einer Viskosität von 0,1 bis 1000 Pa.s,
- b₁): 3 bis 200, bevorzugt 3 bis 50 Gew.-Teilen mindestens eines, gegebenenfalls oberflächlich modifizierten Füllstoffs,
- c₁): 0,5 bis 10, bevorzugt 1 bis 8 Gew.-Teilen Hydrogensiloxan mit mindestens 3 SiH-Funktionen pro Molekül,
- d₁): 0,01 bis 100, bevorzugt 0,03 bis 50 ppm Platin in Form eines Platinkatalysators,
- e₁): 0,01 bis 5, bevorzugt 0,03 bis 3 Gew.-Teilen eines Inhibitors,
eingesetzt.

Bei den vinylgruppenhaltigen Organopolysiloxanen (a₁) handelt es sich um vorzugsweise lineare oder verzweigte Organopolysiloxane mit mindestens 2 Vinylgruppen, deren Viskosität mit einem Rotationsviskosimeter bei 20°C im Bereich von 0,1 bis 1000 Pa.s liegen kann. Besonders bevorzugt sind dabei vinylendgestoppte Polydimethylsiloxane mit einer Viskosität von 0,2 bis 150 Pa.s, gegebenenfalls in Mischung mit Polydimethylsiloxanen, die seitenständige Vinylgruppen enthalten.

Alle Viskositätsangaben wurden bei 20°C gemäß DIN 53 019 ermittelt.

Als Füllstoffe (b₁) sind beispielsweise Extenderfüllstoffe, wie z.B. Quarz- und Cristobalitmehl, sowie gefällte oder pyrogene Kieselsäuren, deren Oberfäche vorzugsweise vor oder während des Mischprozesses mit an sich bekannten Substanzen, wie z.B. Silazanen mit und ohne Zusatz von Wasser, behandelt werden.

Komponente b₁) ist dabei vorzugsweise feinteilige, pyrogene oder gefällte Kieselsäure, die gegebenenfalls mit Hexamethyldisilazan und/oder Tetramethyldivinyldisilazan oberflächlich modifiziert ist.

Komponente (c₁) im Sinne der Erfindung sind bekannte Polyorganosiloxane, die an mindestens drei Siliciumatomen Wasserstoffatome tragen, wie z.B. Verbindungen der Formel 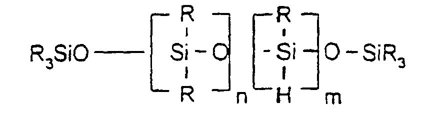 mit
- R =: C₁-C₈-Alkyl, C₆-C₈-Aryl
- m: ≥3 und
- m+n =: 3 - 1 000 und wobei die Einheiten -SiOR₂ und -SiRHO statistisch im Molekül verteilt sind.

Bei dem Pt-Katalysator (d₁) handelt es sich vorzugsweise um Pt-Komplexe, die die Anlagerung von Si-H-Gruppen an Vinylsiloxane katalysieren. Bevorzugt sind daher Pt(O)-Komplexe mit Vinylsiloxanen als Liganden. Es können jedoch auch andere Metallkomplexe, wie z.B. Rh-Verbindungen verwendet werden. Vorzugsweise werden in den Siloxanpolymeren lösliche Pt(0)-Komplexe mit Vinylsiloxanliganden eingesetzt.

Als Inhibitoren (e₁) eignen sich alle Verbindungen, die eine gezielte Reduktion der Vernetzungsgeschwindigkeit ermöglichen, jedoch keine irreversible Schädigung des Katalysators bewirken. Besonders bevorzugt werden kurzkettige oder zyklische Polydimethylsiloxane mit mehreren benachbarten Vinylgruppen an den Siliciumatomen, wie z.B. Tetramethyldivinyldisiloxan,Ethinylcyclohexanol und/oder Tetramethyltetravinylcyclotetrasiloxan als Komponente c) eingesetzt.

In einer weiteren Ausführungsform der Erfindung werden als kondensationsvernetzende Siliconmasse eine Mischung aus
- a₂): 100 Teilen eines linearen oder verzweigten Organopolysiloxans, das zumindest zwei Silanolgruppen besitzt, wobei die Viskosität vorzugsweise im Bereich von 100 bis 1 000 000 mPa.s liegt,
- b₂): 3 bis 200 Teile, bevorzugt 5 bis 50 Teile, mindestens eines gegebenenfalls oberflächlich modifizierten Füllstoffs,
- c₂): 1 bis 15 Gew.-Teile eines Silanvernetzers ausgewählt aus der Reihe der Carbonamid-abspaltenden Silane der Formel

CH₃Si(OC₂H₅)X₂ ,
wobei X entweder C₆H₅CON(CH₃)- oder 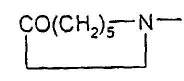 bedeutet, oder
der Oxim-abspaltenden Silane der Formel 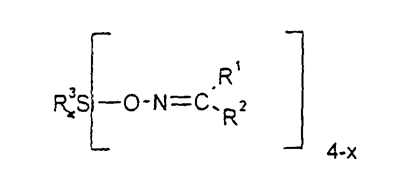 wobei R³ = Alkyl- oder Alkenylreste mit 1 bis 4 C-Atomen sind, R¹ und R² jeweils ein Alkylrest mit 1 bis 4 C-Atomen oder Wasserstoff sein kann oder R¹ und R² zusammen einen Alkylenrest mit 4 oder 5 C-Atomen bedeuten und wobei a die Werte 0 oder 1 annehmen kann, oder
der Carbonsäuren abspaltenden Silane der Formel

R⁴ _{y}-Si-(OCOR⁵)_{4-y},

mit y = 0 und 1,
wobei R⁴ ein gesättigter oder ungesättigter Kohlenwasserstoffrest mit 1 bis 10 C-Atomen
und R⁵ ein einwertiger Kohlenwasserstoffrest mit 1 bis 10 C-Atomen ist, eingesetzt.

Die Viskosität des linearen oder verzweigten Organopolysiloxans a₂) wurde bei 20°C gemäß DIN 53 019 ermittelt. Im üblichen Fall besteht das Organopolysiloxan aus Dimethylsiloxaneinheiten, es können aber auch andere Organoreste eingebracht werden. Weiterhin ist das Organopolysiloxan mit Silanolgruppen terminiert, es können aber auch andere Anordnungen bzw. ein Gehalt an Silanoigruppen größer zwei pro Molekül verwendet werden.

Als gegebenenfalls oberflächlich modifizierten Füllstoff b₂) wird hochdisperse oder gefällte Kieselsäure und/oder eine feinteilige Kreide und/oder ein feinteiliges Quarzmehl eingesetzt. Ebenfalls vorhanden sein können Fasern, Metall- und/oder Kunststoffpulver. Zur eventuellen Oberflächenbehandlung werden z.B. Hexamethyldisilazan sowie Dimethyldichlorsilan verwendet. Die Oberflächengröße BET in m²/g wurde vom Hersteller übernommen und wird üblicherweise über N₂-Absorption gemessen.

Der kozdensationsvernetzenden Mischung können auch weitere Zusätze hinzugemischt werden. Am wichtigsten sind dabei Katalysatoren, die die Vernetzunasgeschwindigkeit regeln, wobei hier z.B. Organozinnverbindungen, wie z.B. Dibutylzinnacetat, Titan- oder Zirkonverbindungen zu nennen sind. Weiterhin sind je nach Bedarf Haftvermittler, wie z.B. Aminoalkylalkoxysilane oder Butoxyacetoxysilane, weichmachende Siliconöle oder Kohlenwasserstoffe, Fungizide, Flammschutzmittel, Stabilisatoren zum Oxidations- und Wärmeschutz wie z.B. Eisenoxide sowie Farbstoffe gebräuchlich.

Außerdem können die verstärkenden Füllstoffe, wie Kieselsäure oder Ruß und auch die streckenden Füllstoffe wie Silikate, Quarzmehl, in weiten Grenzen variiert werden.

Das erfindungsgemäß verwendete Ammoniumcarbonat, Ammoniumhydrogencarbonat oder Alkalihydrogencarbonat, wobei Alkali vorzugsweise Na oder K ist, wird sowohl den kondensationsvemetzenden als auch in den additionsvernetzenden Mischungen in feinteiliger Form hinzugegeben. Die Korngröße ist ≤ 50µm, vorzugsweise ≤ 40 µm, besonders bevorzugt ≤ 20 µm, wobei die Bestimmung der mittleren Partikelgröße mittels Lichtmikroskop unter Verwendung einer geeichten Skala durch Auszählung und Mittelwertbildung (Zahlenmittel) bestimmt wird. Die Zugabe kann entweder in reiner Form als Pulver mit anschließender intensiver Durchmischung oder aber durch Zugabe eines Batches, das durch Vermischung des Carbonats mit z.B. einem Diorganopolysilan gemäß a) hergestellt wurde, erfolgen.

Verwendet werden die oben genannten erfindungsgemäßen Carbonate und/oder Hydrogencarbonate in einer Menge von 0,2 bis 10, vorzugsweise 0,5 bis 6 Gewichtsteilen, wobei der gewünschte Schäumungsgrad die Menge bestimmt.

Als UHF-aktive Substanzen werden Graphit, Ruße, vorzugsweise elektrisch leitfähige Ruße, Eisenoxid, Magnesiumoxid und/oder Aluminiumhydroxid eingesetzt. Im Fall der additionsvernetzenden Mischung können die UHF-aktiven Substanzen auch in Form eines wasserhaltigen Füllstoffs und/oder wasserhaltigen Zeoliths eingesetzt werden.

Ebenfalls einsetzbar als UHF-aktiven Substanzen sind weitere Substanzen mit ausreichend hoher dielektrischer Konstante und ausreichend großem Verlustfaktor bei angewendeter Frequenz.

UHF-Wellen (Microwellen) erzeugende Geräte sind in der Gummi- und Kunststoffindustrie weit verbreitet und gebräuchlich. Es können auch gewöhnliche, für die Küchenbenutzung hergestellte Geräte verwendet werden. Die Frequenz der Mikrowellen liegt üblicherweise im Bereich von 1000•10⁶ Hz bis 5725•10⁶ Hz, wobei die Frequenz 2450•10⁶ Hz technisch häufig verwendet wird. Es können aber auch Hochfrequenzwellen im Bereich von 13,56•10⁶ Hz bis 40,68•10⁶ Hz verwendet werden.

Die Dauer der UHF-Wellenbehandlung richtet sich sehr nach der Aktivität der verwendeten UHF-aktiven Substanz. Sie kann sich im Bereich von z.B. 10-20 sec bis hin zu 10-20 Minuten und mehr bewegen, wobei die eingebrachte Leistung pro Masse zu schäumendes Produkt von entscheidender Bedeutung ist. Möglich ist auch die Anwendung eines Leistungsgradienten und/oder die Kopplung mit der Zuführung von thermischer Energie.

Sowohl die additiv- als auch die kondensationsvemetzenden Massen können darüber hinaus weitere Zusätze, wie z.B. Farbpigmente oder Additive zur Erhöhung der Flammwidrigkeit, wie z.B. Ruß oder TiO₂,enthalten

Die Herstellung der Mischung erfolgt im Fall der additionsvernetzenden Siliconmasse üblicherweise auch Aufteilung der Vormischung in zwei Komponenten, wobei eine den Platinkatalysator und den Inhibitor und die andere Komponente den Hydrogensiloxanvernetzer enthält. Diese beiden Komponenten sind getrennt lagerfähig. Die Zumischung des Carbonats und der UHF-aktiven Substanz kann entweder nach der Vermischung der zwei Komponenten oder auch zu einer der beiden Komponenten vor der Vermischung erfolgen. Die Gesamtmischung wird dann zur Schäumung den UHF-Wellen ausgesetzt.

Im Fall der kondensationsvernetzenden Mischung wird vorzugsweise das Carbonat und/oder Hydrogencarbonat erst unmittelbar vor der Schäumung eingerührt. Die UHF-aktive Substanz kann bereits in der Carbonat-freien Vormischung enthalten sein, sie kann aber auch zusammen mit dem Carbonat und/oder Hydrogencarbonat zusammen oder auch kurz nach den Dienen eingemischt werden.

Die nachfolgenden Beispiele, in denen alle Teile Gewichtsteile bedeuten, erläutern die Erfindung, ohne dabei jedoch beschränkend zu wirken.

### Ausführungsbeispiele

### Beispiel 1

In einem Dissolver wurden zur Herstellung der Basismischung 5,0 kg vinylendgestopptes Polydimethylsiloxan (Polymer Typ a₁) mit einer Viskosität bei 20°C von 10 Pa.s sowie 8,0 kg vinylendgestopptes Polydimethylsiloxan mit einer Viskosität bei 20°C von 65 Pa.s a₁) mit 3,3 kg Hexamethyldisilazan und 0,7 kg Wasser gemischt und anschließend mit 6 kg pyrogener Kieselsäure mit einer BET-Oberfläche von 300 m²/g (gemessen über N₂-Absorption) zu einer homogenen Masse vermischt (Einarbeirung des Füllstoffs gemäß DE-OS 2 535 334). Die Mischung wurde zunächst auf 130°C erwärmt und 1,5 h im geschlossenen Dissolver gerührt und danach bei 160°C unter Vakuum von Wasser und anderen flüchtigen Bestandteilen befreit. Nach dem Erkalten wurde diese Basismischung zur Herstellung der A-Komponente mit 12,0 kg Polymer Typ a sowie mit 0,01 kg eines Tetramethyltetravinylcyclotetrasiloxans mit einem Gehalt an 15 % Pt in Form eines Pt-Komplexes (entspricht 22 ppm Pt in der Gesamtformulierung A+B) mit Tetramethyltetravinylcyclotetrasiloxan als Ligand vermischt.

Zur Herstellung der B-Komponente wurde eine Basismischung mit den gleichen Mengen wie oben hergestellt, jedoch mit 10,0 kg Polymer Typ a₁), 0,03 kg Ethinylcyclohexanol e₁) sowie 2,7 kg eines trimethylsilylendgestoppten Polymethylhydrogensiloxans mit durchschnittlich 10 Methylhydrogensiloxyeinheiten und 20 Dimethylsiloxyeinheiten per Molekül c₁) vermischt.

Den beiden Komponente A und B wurden je 200 g entnommen und zusammen mit 32 g eines Gemisches aus 6 Teilen des obengenannten Polymers des Typs a₁) mit der Viskosität 10 Pa.s und 4 Teilen feinteiligem Ammoniumhydrogencarbonat intensiv durchmischt.

Die mittlere Partikelgröße des NH₄HCO₃, die mittels Lichtmikroskop unter Verwendung einer geeichten Skala durch Auszählung und Mittelwertbildung bestimmt wurde, betrug 15 µm.

Danach wurden 120 g eines Rußbatches, bestehend aus 10 Teilen eines elektrisch leitfähigen Rußes (käuflich erhältlich bei der Fa. Degussa, Deutschland, unter der Bezeichnung Printex XE 2, mittlere Primärteilchengröße 30 nm) und 90 Teilen eines Polydimethylsiloxans vom Typ a₁) mit der Viskosität von 10 Pa.s eingemischt.

Von dieser Gesamtmischung wurden 400 g in ein 2 L-Becherglas, das zuvor mit einem Teflonspray als Antihaftmittel präpariert worden war, gegeben.

Dieses Becherglas wurde in einem handelsüblichen Microwellengerät für den Küchengebrauch einer UHF-Wellenstrahlung ausgesetzt. Dabei wurde zunächst eine Leistung von 700 W über 4 Minuten angewendet. Bereits nach einer halben Minute begann der Schäumungsprozeß und nach 2 Minuten wurde eine Schaumhöhe im heißen Zustand von 1 800 ml bei einem Ausgangsvolumen von ca. 360 ml erreicht. Wegen der jetzt noch klebrigen Oberfläche wurde die Leistung für 5 Minuten auf 900 W erhöht, wodurch die Klebfreiheit erreicht wurde. Im Randbereich kann die Vernetzung durch die abkühlende Wirkung des Glases nicht ausreichend stattfinden, weswegen eine Beheizung von außen im Umluftofen bei 200°C für 15 Minuten erfolgte. Nach der Abkühlung ließ sich der Schaumzylinder mit einer Höhe von 14 cm und einem Durchmesser von 12 cm (Schaumfaktor ca. 4.4) leicht entformen. Ein Schnitt zeigte eine homogene Schaumstruktur. Der Schaum ließ sich mit einer Feuerzeugflamme nicht in Brand setzen und zeigte eine gute Wärmestabilität bei 300°C Lagertemperatur.

### Beispiel 2

Den beiden Komponenten A und B vom Beispiel 1 wurden je 50 g entnommen und mit 7,5 g eines Gemisches aus 6 Teilen des vinylendgestoppten Polymers (Typ a₁) mit einer Viskosität bei 20°C von 10 Pa.s und 4 Teilen feinteiligem Ammoniumhydrogencarbonat (Partikelgröße s. Beispiel 1) intensiv durchgemischt. Danach wurden 10 g eines Graphits ("Synthetischer Spezialgraphit" der Fa. FUH, Walluf, Deutschland) zugemischt und der Platingehalt mit dem unter Beispiel 1 genannten Pt-Katalysator so erhöht, daß insgesamt ein Pt-Gehalt von 28 ppm erreicht wurde. Von der so hergestellten graphithaltigen und ammoniumhydrogenhaltigen Mischung wurden 20 g in einen Hohlzylinder aus Teflon (Durchmesser 55 mm, Höhe 30 mm) auf dem Boden verteilt und 10 Minuten einer UHF-Wellenleistung von 900 Watt ausgesetzt. Es entwickelte sich langsam ein außerordentlich feinporiger Siliconschaum mit sehr guten elastischen Eigenschaften und einem Schaumfaktor von ca. 5. Der Schaum ließ sich mit einer Streichholzflamme nicht in Brand setzen.

### Beispiel 3

In einem Planetenmischer wurden 66 Teile eines α,ω-Dihydroxypolydimethylsiloxans mit der Viskosität von 50 Pa.s und 21,1 Teile eines α,ω-Bis(trimethylsiloxy)-polydimethylsiloxans mit einer Viskosität von 1 Pa.s vermischt.

Es wurden nacheinander als Füllstoffe 4,3 Teile einer pyrogen erzeugten, mit Hexamethyldisiloxan oberflächenbehandelten Kieselsäure (BET-Oberfläche 150 m²/g) und 4,3 Teile einer pyrogen erzeugten Kieselsäure (BET-Oberfläche 150 m²/g) in Portionen eingerührt.

Die eingerührte Luft wurde durch Evakuieren entfernt und nach dem Belüften wurden 4,0 Teile Ethyltriacetoxysilan und 0,08 Teile Dibutylzinnacetat unter Rühren zugegeben. Abschließend wurden 0,5 Teile eines Haftmittels bestehend aus tertiären Butoxyacetoxysilanen mit überwiegend Dibutoxydiacetoxysilan eingemischt.

100 Teile des so hergestellten Gemisches wurden mit 40 Teilen eines Rußbatches bestehend aus 10 Teilen eines elektrisch leitfähigen Rußes (käuflich erhältlich bei der Fa. Degussa, Deutschland, unter der Bezeichnung Printex XE2, mittlere Primärteilchengröße 30 mm, Herstellerangabe) und 90 Teilen eines Polydimethylsiloxans vom Typ a₁) mit der Viskosität von 10 Pa.s eingemischt. Weiterhin wurden 4 Teile eines feinteiligen Ammoniumhydrogencarbonats eingemischt, wobei die mittlere Partikelgröße 15 µm betrug. Von der so hergestellten rußhaltigen und ammoniumhydrogenhaltigen Mischung wurden 30 g in einen Hohlzylinder aus Teflon (Durchmesser 55 mm, Höhe 30 mm) auf dem Boden verteilt und 20 Minuten einer UHF-Wellenleistung von 600 W ausgesetzt

Es entwickelte sich ein homogener Siloxanschaum mit einem Schaumfaktor von ca. 4.

### Beispiel 4

In einem Planetenmischer wurden 80 Teile eines α,ω-Dihydroxypolydimethylsiloxans mit der Viskosität 50 Pa.s a₂) mit 10 Teilen eines feinteiligen Eisenoxids (käuflich erhältlich unter der Bezeichnung Bayferrox 303T, Hersteller: Bayer AG, Deutschland, mittlere Partikelgröße lt. Hersteller: 0,6 µm) vermischt. Nach der Einmischung von 4 Teilen Vinylbutanonoximinosilan c₂) wurde mit Dimethyldichlorsilan hydrophobierte, pyrogen hergestellte Kieselsäure (BET-Oberfläche: 110 m²/g) in Portionen eingerührt.

Abschließend erfolgte die Zugabe von 1 Teil des Haftmittels Aminopropyltriethoxysilan. Dieser Mischung wurde feinteiliges Ammoniumhydrogencarbonat (mittlere Partikelgröße: 15 µm) in einer Menge zugesetzt, daß eine 3 %ige homogene Masse entstand. Hiervon wurden 6,6 g in einen Hohlzylinder aus Teflon (Durchmesser 55, Höhe 30 mm) auf dem Boden verteilt und 20 Minuten einer UHF-Wellenleistung von 600 W ausgesetzt. Es entwickelte sich ein Siliconschaumkörper mit einem Schaumfaktor von 4 und homogener Schaumstruktur.

## Patentansprüche

1. Verfahren zur Herstellung von Siliconschäumen mittels Ultrahochfrequenzwellen, **dadurch gekennzeichnet, daß** die additions- oder kondensationsvernetzenden Siliconmassen als Bestandteile
- Alkali- und/oder Ammoniumcarbonate und/oder Alkali- und/oder Ammoniumhydrogencarbonate in einer Menge von 0,2 bis 10 Gewichtsprozent in feinteiliger Form und mit einer mittleren Korngröße von weniger als 50 µm und
- ultrahochfrequenzwellen-aktive Substanzen enthalten.

2. Verfahren nach Anspruch 1, **dadurch gekennzeichnet, daß** als additionsvernetzende Siliconmasse eine Mischung aus
a₁) 100 Gew.-Teilen mindestens eines vinylgruppenhaltigen linearen oder verzweigten Organopolysiloxans mit mindestens 2 Vinylgruppen mit einer Viskosität von 0,1 bis 1000 Pa.s,
b₁) 3 bis 200 Gew.-Teilen mindestens eines, gegebenenfalls oberflächlich modifizierten Füllstoffs,
c₁) 0,5 bis 10 Gew.-Teilen Hydrogensiloxan mit mindestens 3 SiH-Funktionen pro Molekül,
d₁) 0,01 bis 100 ppm Platin in Form eines Platinkatalysators und
e₁) 0,01 bis 5 Gew.-Teilen eines Inhibitors
eingesetzt wird.

3. Verfahren nach Anspruch 1, **dadurch gekennzeichnet, daß** als kondensationsvernetzende Siliconmasse eine Mischung aus
a₂) 100 Teile eines linearen oder verzweigten Organopolysiloxans, das zumindest zwei Silanolgruppen besitzt, mit einer Viskosität im Bereich von 100 bis 1 000 000 mPa.s,
b₂) 3 bis 200 Teile mindestens eines gegebenenfalls oberflächlich modifizierten Füllstoffs,
c₂) 1 bis 15 Gew.-Teile eines Silanvernetzers ausgewählt aus der Reihe der Carbonamid-abspaltenden Silane der Formel
CH₃Si (OC₂H₅)X₂,
wobei X entweder C₆H₅CON(CH₃)- oder 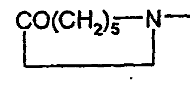 bedeutet, oder
der Oxim-abspaltenden Silane der Formel 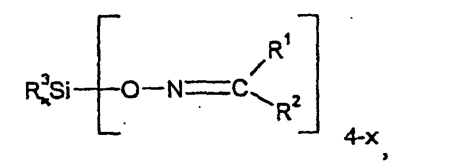 wobei R³ = Alkyl- oder Alkenylreste mit 1 bis 4 C-Atomen sind, R¹ und R² jeweils ein Alkylrest mit 1 bis 4 C-Atomen oder Wasserstoff sein kann oder R¹ und R² zusammen einen Alkylenrest mit 4 oder 5 C-Atomen bedeuten und wobei a die Werte 0 oder 1 annehmen kann, oder
der Carbonsäuren abspaltenden Silane der Formel
R⁴ _{y}-Si-(OCOR⁵)_{4-y},
mit y = 0 und 1,
wobei R⁴ ein gesättigter oder ungesättigter Kohlenwasserstoffrest mit 1 bis 10 C-Atomen
und R⁵ ein einwertiger Kohlenwasserstoffrest mit 1 bis 10 C-Atomen ist,
eingesetzt wird.

4. Verfahren nach einem oder mehreren der Ansprüche 1 bis 3, **dadurch gekennzeichnet, daß** die Alkali- und/oder Ammoniumcarbonate und/oder -hydrogencarbonate eine mittlere Teilchengröße von <40 µm aufweisen.

5. Verfahren nach einem oder mehreren der Ansprüche 1 bis 4, **dadurch gekennzeichnet, dass** die ultrahoch frequenzaktiven Substanzen aus der Gruppe ausgewählt werden, die aus Graphit, Rußen elektrisch leitfähigen Ruße, Eisenoxiden Magnesium oxid und Aluminium hydroxid besteht.

## Claims

1. Process for the production of silicone foams by means of ultrahigh-frequency waves (UHF), **characterized in that** the addition- or condensation-crosslinking silicone compositions contain, as constituents,
- alkali metal and/or ammonium carbonates and/or alkali metal and/or ammonium hydrogencarbonates in an amount of from 0.2 to 10 per cent by weight in finely divided form and having an average particle size of less than 50 µm and
- UHF-active substances.

2. Process according to Claim 1, **characterized in that** the addition-crosslinking silicone composition used is a mixture of
a₁) 100 parts by weight of at least one vinyl group-containing linear or branched organopolysiloxane containing at least 2 vinyl groups and having a viscosity of from 0.1 to 1000 Pa.s,
b₁) from 3 to 200 parts by weight of at least one, optionally surface-modified filler,
c₁) from 0.5 to 10 parts by weight of hydrogensiloxane containing at least 3 SiH functions per molecule,
d₁) from 0.01 to 100 ppm of platinum in the form of a platinum catalyst,
e₁) from 0.01 to 5 parts by weight of an inhibitor.

3. Process according to Claim 1, **characterized in that** the condensation-crosslinking silicone composition used is a mixture of
a₂) 100 parts of a linear or branched organopolysiloxane containing at least two silanol groups, where the viscosity is in the range from 100 to 1,000,000 mPa.s,
b₂) from 3 to 200 parts of at least one filler which has optionally been surface-modified,
c₂) from 1 to 15 parts by weight of a silane crosslinking agent selected from the series consisting of carboxamide-eliminating silanes of the formula
CH₃Si(OC₂H₅)X₂,
where X is either C₆H₅CON(CH₃)- or 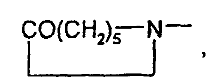 or
oxime-eliminating silanes of the formula 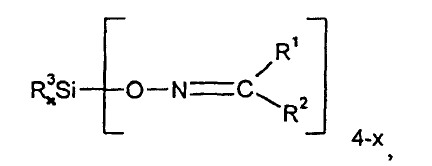 where R₃ is an alkyl or alkenyl radical having 1 to 4 carbon atoms, R₁ and R₂ can each be an alkyl radical having 1 to 4 carbon atoms or hydrogen, or R₁ and R₂ together are an alkylene radical having 4 or 5 carbon atoms, and where x can adopt the value 0 or 1, or
carboxylic acid-eliminating silanes of the formula
R⁴ _{y}-Si-(OCOR⁵)_{4-y}
where y = 0 or 1,
where R⁴ is a saturated or unsaturated hydrocarbon radical having 1 to 10 carbon atoms,
and R⁵ is a monovalent hydrocarbon radical having 1 to 10 carbon atoms.

4. Process according to one or more of Claims 1 to 3, **characterized in that** the alkali metal and/or ammonium carbonates and/or hydrogencarbonates have an average particle size of < 40 µm.

5. Process according to one or more of Claims 1 to 4, **characterized in that** the UHF-active substances are selected from the group consisting of graphite, carbon blocks, electrically conductive carbon blocks, iron oxides, magnesium oxide and aluminium hydroxide.

## Revendications

1. Procédé pour la préparation de mousses de silicones sous l'action d'ondes à ultra-haute fréquence, **caractérisé en ce que** les masses de silicones réticulant par addition ou par condensation contiennent :
- des carbonates alcalins et/ou d'ammonium et/ou des bicarbonates alcalins et/ou d'ammonium en quantité de 0,2 à 10 % en poids et à l'état finement divisé, avec une dimension moyenne de grain inférieure à 50 µm et
- des substances actives sous l'action des ondes à ultra-haute fréquence.

2. Procédé selon la revendication 1, **caractérisé en ce que** la masse de silicone réticulant par addition qui est mise en oeuvre consiste en un mélange de
a1) 100 parties en poids d'au moins un organopolysiloxane linéaire ou ramifié à groupes vinyle, avec au moins deux groupes vinyle et à une viscosité de 0,1 à 1 000 Pa.s,
b1) 3 à 200 parties en poids d'au moins une matière de charge éventuellement modifiée en surface,
c1) 0,5 à 10 parties en poids d'un hydrogénosiloxane à au moins 3 fonctions SiH par molécule,
d1) 0,01 à 100 ppm de platine sous forme d'un catalyseur au platine et
e1) 0,01 à 5 parties en poids d'un inhibiteur.

3. Procédé selon la revendication 1, **caractérisé en ce que** la masse de silicone réticulant par condensation qui est mise en oeuvre consiste en un mélange de
a2) 100 parties d'un organopolysiloxane linéaire ou ramifié à au moins deux groupes silanol et à une viscosité dans l'intervalle de 100 à 1 000 000 mPa.s,
b2) 3 à 200 parties d'au moins une matière de charge éventuellement modifiée en surface,
c2) 1 à 15 parties en poids d'un silane réticulant choisi parmi les silanes libérant des carboxamides et répondant à la formule
CH₃Si(OC₂H₅)X₂,
dans laquelle X représente C₆H₅CON(CH₃) ou 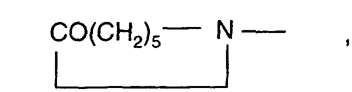 ou bien
les silanes libérant des oximes et répondant à la formule 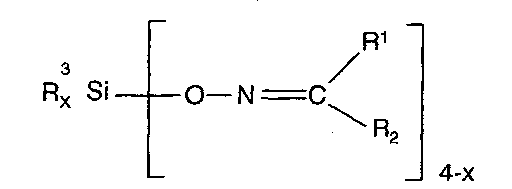 dans laquelle R³ représente un groupe alkyle ou alcényle en C1-C4, R¹ et R² représentent chacun un groupe alkyle en C1-C4 ou l'hydrogène, ou bien R¹ et R² forment ensemble un groupe alkylène à 4 ou 5 atomes de carbone, et a est égal à 0 ou 1,
ou bien
les silanes libérant des acides carboxyliques et répondant à la formule
R⁴ _{y}-Si-(OCOR⁵)_{4-y},
dans laquelle y = 0 ou 1,
R⁴ représentant un radical hydrocarboné saturé ou insaturé en C1-C10 et
R⁵ un radical hydrocarboné monovalent en C1-C10.

4. Procédé selon une ou plusieurs des revendications 1 à 3, **caractérisé en ce que** les carbonates et/ou bicarbonates alcalins et/ou d'ammonium ont une dimension de particule moyenne inférieure à 40µm.

5. Procédé selon une ou plusieurs des revendications 1 à 4, **caractérisé en ce que** les substances actives aux fréquences ultra-hautes sont choisies dans le groupe consistant en le graphite, les noirs de carbone, les noirs de carbone conducteurs de l'électricité, les oxydes de fer, la magnésie et l'hydroxyde d'aluminium.
